# EUROPÄISCHE PATENTANMELDUNG

(11) **EP 4 498 035 A1**
(43) Veröffentlichungstag der Anmeldung: **29.01.2025**
(21) Anmeldenummer: 24189981.4
(22) Anmeldetag: 22.07.2024
(51) Int. Cl.: G01B 11/275, G01S 7/40, G01S 7/497

(54) **MESSANORDNUNG ZUR KALIBRIERUNG EINER SENSORIK EINES FAHRZEUGS**

(30) Priorität: 28.07.2023 DE 102023120086
(71) Anmelder: WMS Wagner GmbH, 94522 Wallersdorf (DE)
(72) Erfinder: Wagner, Franz, 94363 Oberschneiding (DE)
(74) Vertreter: Wolf, Gerhard

(57) **Zusammenfassung**

Die Erfindung betrifft eine Messanordnung zur Kalibrierung eines Sensors (S) eines Fahrzeugs (10) umfassend eine Messstation (2) mit einer Messstationsebene (ME), durch die ein erster und zweiter Halbraum (H1, H2) voneinander abgegrenzt wird, wobei die Messtation (2) eine erste und eine zweite Kamera (K1, K2) umfasst, die an der Messtation (2) derart angeordnet sind, dass durch die erste und zweite Kamera (K1, K2) jeweils ein Bereich des ersten Halbraums (H1 erfassbar ist. Die Messtation (2) weist zumindest eine dritte Kamera (K3) auf, die derart an der Messtation angeordnet ist, dass der Erfassungsbereich der dritten Kamera (K3) in dem zweiten Halbraumraum (H2) liegt.

## Beschreibung

Die Erfindung betrifft eine Messanordnung und ein Verfahren zur Kalibrierung eines Sensors eines Fahrzeugs.

Fahrzeuge mit Fahrassistenzsystemen und/oder mit der Fähigkeit von zumindest teilweise autonomen Fahrfunktionen weisen Sensoren auf, mittels denen das Umfeld des Fahrzeugs erfassbar ist. Derartige Sensoren sind beispielsweise Radarsensoren, Kameras, LIDAR-Sensoren, Ultraschallsensoren etc.

Im Rahmen von Reparaturarbeiten am Fahrzeug, beispielsweise bei der Unfallinstandsetzung oder anderen Eingriffen, die die Ausrichtung eines Sensors betreffen, kann es nötig sein, dass zumindest ein Sensor des Fahrzeugs neu kalibriert werden muss. Hierzu muss eine Sensor-Messmarke, die durch den zu kalibrierenden Sensor zu erfassen ist, im Umfeld des Fahrzeugs an einer vorgegebenen Position, nachfolgend als Sollposition bezeichnet, platziert werden. Nach der Platzierung kann in einem weiteren Schritt die Kalibrierung des Sensors erfolgen.

Vor der Platzierung der Messmarke müssen am Fahrzeug selbst Messmarken eingemessen werden, beispielsweise an den Rädern oder der Fahrzeugkarosserie angeordnete Messmarken, um die Sensor-Messmarke in einer geforderten Position relativ zum Fahrzeug zu positionieren. So kann es beispielsweise gefordert sein, die Sensor-Messmarke in Abhängigkeit von Fahrzeugbezugsinformationen, die aus den am Fahrzeug angeordneten Messmarken zu bestimmen sind, beispielsweise der geometrischen Fahrachse, zu positionieren.

Problematisch bei den bekannten Messanordnungen ist, dass Platzierung der Messmarke sehr aufwändig ist, da diese häufig durch manuelles Einmessen platziert werden muss und schwer dokumentiert werden kann.

Ausgehend hiervon ist es Aufgabe der Erfindung, eine Messanordnung anzugeben, die eine genauer Platzierung einer Messmarke mit geringem Aufwand ermöglicht.

Die Aufgabe wird durch eine Messanordnung mit den Merkmalen des unabhängigen Patentanspruchs 1 gelöst. Bevorzugte Ausführungsformen sind Gegenstand der Unteransprüche. Ein Verfahren zur Positionierung einer Messmarke relativ zum Fahrzeug ist Gegenstand des nebengeordneten Patentanspruchs 8.

Gemäß einem ersten Aspekt bezieht sich die Erfindung auf eine Messanordnung zur Kalibrierung eines Sensors eines Fahrzeugs. Die Messanordnung umfasst eine Messstation mit einer Messstationsebene, durch die ein erster und zweiter Halbraum voneinander abgegrenzt wird. Die Messtationsebene ist insbesondere eine vertikal verlaufende Ebene, deren Normale in Richtung der Mittellängsachse des zu vermessenden Fahrzeugs verläuft. Die Messtation umfasst eine erste und eine zweite Kamera, die an der Messtation derart angeordnet sind, dass durch die erste und zweite Kamera jeweils ein Bereich des ersten Halbraums erfassbar ist. Die Messstation ist dazu ausgebildet, vor oder hinter dem Fahrzeug angeordnet zu werden. In dem ersten Halbraum kann sich in einer ersten Messsituation das zu vermessende Fahrzeug befinden. In einer alternativen Messituation ist der erste Halbraum der vom zu vermessenden Fahrzeug abgewandte Halbraum. Die Messtation weist zumindest eine dritte Kamera auf, die derart an der Messstation angeordnet ist, dass der Erfassungsbereich der dritten Kamera in dem zweiten Halbraumraum liegt. In der ersten Messsituation liegt der Erfassungsbereich der dritten Kamera zumindest größtenteils in dem Halbraum, in dem sich das zu vermessende Fahrzeug nicht befindet. In der alternativen Messituation liegt der Erfassungsbereich der dritten Kamera zumindest größtenteils in dem Halbraum, in dem sich auch das zu vermessende Fahrzeug befindet.

Der wesentliche technische Vorteil der Messanordnung besteht darin, dass durch die dritte Kamera der Erfassungsbereich der Messtation erweitert wird, so dass beispielsweise ein von dem zu vermessenden Fahrzeug abgewandter Raumbereich erfassbar wird, in dem eine Sensor-Messmarke zu positionieren ist, mittels der ein Sensor, der einen Raumbereich vor oder hinter dem Fahrzeug erfasst, zu kalibrieren ist. Durch die dritte Kamera lässt sich die Sensor-Messmarke auf einer gewünschten Sollposition, die relativ zu einer Fahrzeugbezugsinformation definiert ist, anordnen und anschließend der Sensor mittels dieser Sensor-Messmarke kalibrieren. Die Fahrzeugbezugsinformation kann beispielsweise die geometrische Fahrachse des Fahrzeugs oder eine auf die Fahrzeugkarosserie bezogene Information, beispielsweise eine Karosseriemitteninformation oder die Mittellängsachse des Fahrzeugs sein. Dadurch wird eine technisch einfache und protokollierbare Anordnung der Sensor-Messmarke und Sensorkalibrierung möglich.

Gemäß einem Ausführungsbeispiel weisen die erste Kamera einen ersten Erfassungsbereich und die zweite Kamera einen zweiten Erfassungsbereich mit jeweils einer Erfassungsbereichsmittelachse auf. Die Erfassungsbereichsmittelachsen stehen die in Bezug auf die Messstationsebene zu einer ersten Seite von dieser Messstationsebene ab. Die dritte Kamera weist einen dritten Erfassungsbereich mit einer dritten Erfassungsbereichsmittelachse auf, die zu einer zweiten Seite, die der ersten Seite gegenüberliegt, von der Messstationsebene absteht.

Damit kann durch die dritte Kamera eine Vergrößerung des Erfassungsbereichs erreicht werden, und zwar in Richtung der vom Fahrzeug abgewandten Seite hin.

Gemäß einem Ausführungsbeispiel sind die erste und zweite Kamera an einem horizontal verlaufenden Messbalken angeordnet und derart zueinander beabstandet, dass die erste Kamera einen ersten Bereich seitlich links neben dem Fahrzeug und die zweite Kamera einen dem ersten Bereich gegenüberliegenden Bereich seitlich rechts neben dem Fahrzeug erfasst. Damit können durch die erste und zweite Kamera Messmarken erfasst werden, die an den Rädern des Fahrzeugs angeordnet sind, um die Lage und Ausrichtung der Räder und damit Fahrzeugbezugsinformationen, wie beispielsweise die geometrische Fahrachse des Fahrzeugs, zu erfassen.

Gemäß einem Ausführungsbeispiel ist die dritte Kamera zur Erfassung eines Rückraums, der hinter der Messtation liegt und vom zu vermessenden Fahrzeug abgewandt ist, ausgebildet. Die dritte Kamera weist eine Erfassungsbereichsmittelachse auf, die senkrecht zur Messstationsebene verläuft. Damit können mittels der dritten Kamera Bereiche vor und/oder hinter dem zu vermessenden Fahrzeug abgedeckt werden, in denen Messmarken zur Kalibrierung von Sensoren zu platzieren sind, die das Umfeld vor oder hinter dem Fahrzeug erfassen.

Gemäß einem Ausführungsbeispiel weist die Messanordnung eine Rechnereinheit mit einem Programm auf. Das Programm ist dazu ausgebildet, Bildinformationen von Messmarken, die an den Rädern des Fahrzeugs angeordnet sind, mittels der ersten und zweiten Kamera zu erfassen, und basierend darauf Informationen zur Lage und Ausrichtung der Räder des Fahrzeugs zu berechnen. Insbesondere werden aus den Informationen zur Lage und Ausrichtung der Räder des Fahrzeugs Fahrzeugbezugsinformationen, beispielsweise die geometrische Fahrachse des Fahrzeugs, berechnet. Das Programm ist zudem dazu ausgebildet, Positionskorrekturinformationen zu einer Sensor-Messmarke, die zur Kalibrierung eines Sensors des Fahrzeugs verwendet wird, der einen vor und/oder hinter dem Fahrzeug liegenden Umgebungsbereich erfasst, basierend auf den Bildinformationen, die von der dritten Kamera bereitgestellt werden und die diese Sensor-Messmarke enthalten, zu berechnen. Damit ist es möglich, durch die Messanordnung die Sensor-Messmarke, mittels der eine Kalibrierung des Sensors des Fahrzeugs erfolgt, relativ zum Fahrzeug exakt zu positionieren.

Alternativ weist die Messanordnung eine Rechnereinheit mit einem Programm auf, das dazu ausgebildet ist, Bildinformationen von Messmarken, die in Seitenbereichen der Karosserie des Fahrzeugs angeordnet sind, mittels der ersten und zweiten Kamera zu erfassen und basierend darauf Fahrzeugbezugsinformationen zu berechnen. Das Programm ist zudem dazu ausgebildet, Positionskorrekturinformationen zu einer Sensor-Messmarke, die zur Kalibrierung eines Sensors des Fahrzeugs verwendet wird, der einen vor und/oder hinter dem Fahrzeug liegenden Umgebungsbereich erfasst, basierend auf den Bildinformationen, die von der dritten Kamera bereitgestellt werden und die diese Sensor-Messmarke enthalten, und den Fahrzeugbezugsinformationen zu berechnen. Damit können mittels der Messanordnung auch an der Karosserie angeordnete Messmarken zur Positionierung einer zentral vor oder hinter dem Fahrzeug anzuordnenden Sensor-Messmarke verwendet werden.

Gemäß einem weiteren alternativen Ausführungsbeispiel weist die Messanordnung eine Rechnereinheit mit einem Programm auf, wobei das Programm dazu ausgebildet ist, Bildinformationen von Messmarken, die an einer oder mehreren vorgegebenen Positionen am Fahrzeug, insbesondere an der Fahrzeugkarosserie angeordnet sind, mittels der dritten Kamera zu erfassen, und basierend darauf Fahrzeugbezugsinformationen zu berechnen. Das Programm ist zudem dazu ausgebildet, Positionskorrekturinformationen zu einer Sensor-Messmarke, die zur Kalibrierung eines Sensors des Fahrzeugs verwendet wird, der einen vor und/oder hinter dem Fahrzeug liegenden Umgebungsbereich erfasst, basierend auf den Bildinformationen, die von der ersten und/oder zweiten Kamera bereitgestellt werden und die diese Sensor-Messmarke enthalten, zu berechnen. Damit kann mittels der dritten Kamera eine mittig an der Fahrzeugkarosserie angeordnete Messmarke erfasst und durch die erste und/oder zweite Kamera die Sensor-Messmarke richtig positioniert werden.

Gemäß einem Ausführungsbeispiel weist das Programm Sollpositionsinformationen der Sensor-Messmarke auf. Die Positionskorrekturinformationen geben an, wie die Position und/oder Ausrichtung der Sensor-Messmarke verändert werden muss, um zu erreichen, dass die Sensor-Messmarke eine für die Kalibrierung des Sensors des Fahrzeugs erforderliche Sollposition einnimmt. In anderen Worten wird durch einen Vergleich der Sollposition (definiert durch die Sollpositionsinformationen) mit der aktuellen Ist-Position eine Positionsabweichung bestimmt und die Positionskorrekturinformationen sind Anweisungen an eine die Positionierung der Sensor-Messmarke vornehmende Person, wie die Position der Sensor-Messmarke verändert werden muss, um diese auf der Sollposition anzuordnen.

Gemäß einem Ausführungsbeispiel weist das Programm der Rechnereinheit Informationen zur Position der dritten Kamera relativ zur Position der ersten und zweiten Kamera auf. Durch den bekannten örtlichen Bezug zwischen der ersten und zweiten Kamera und der dritten Kamera können Positionsunterschiede zwischen der ersten und zweiten Kamera und der dritten Kamera kompensiert werden.

Gemäß einem weiteren Aspekt wird ein Verfahren zur Positionierung einer Sensor-Messmarke relativ zu einem Fahrzeug offenbart. Das Verfahren nutzt eine Messanordnung, die eine Messstation mit einer ersten, einer zweiten und einer dritten Kamera umfasst. Die Erfassungsbereiche der ersten und zweiten Kamera sind entgegengesetzt zu dem Erfassungsbereich der dritten Kamera gerichtet. Die Messstation ist dazu ausgebildet, vor oder hinter dem Fahrzeug angeordnet zu werden. Das Verfahren umfasst folgende Schritte:
- Erfassen von Bildinformationen zumindest einer an dem Fahrzeug angeordneten Messmarke, vorzugsweise mehrerer am Fahrzeug angeordneter Messmarken, mittels der ersten und/oder zweiten Kamera oder mittels der dritten Kamera;
- mittels der Rechnereinheit der Messstation, Ermitteln der Lage und/oder Ausrichtung der zumindest einen Messmarke basierend auf den Bildinformationen der zumindest einen Messmarke, die an dem Fahrzeug angeordnet ist;
- mittels der Rechnereinheit der Messstation, Berechnen von Fahrzeugbezugsinformationen basierend auf der Lage und/oder Ausrichtung der zumindest einen am Fahrzeug angeordneten Messmarke;
- Erfassen:
   o der Lage und Ausrichtung einer Sensor- Messmarke, die vor oder hinter dem Fahrzeug im Erfassungsbereich der dritten Kamera angeordnet ist, durch die dritte Kamera, falls die zumindest eine am Fahrzeug angeordnete Messmarke mittels der ersten und/oder zweiten Kamera erfasst wurde, oder
   o der Lage und Ausrichtung einer Sensor- Messmarke, die vor oder hinter dem Fahrzeug im Erfassungsbereich der ersten oder zweiten Kamera angeordnet ist, durch die erste oder zweite Kamera, falls die zumindest eine am Fahrzeug angeordnete Messmarke mittels der dritten Kamera erfasst wurde;
- mittels der Rechnereinheit der Messstation, Berechnen einer Sollposition der Sensor-Messmarke basierend auf den berechneten Fahrzeugbezugsinformationen; und
- Ausgeben einer Positionskorrekturinformation an einer Benutzerschnittstelle der Rechnereinheit, basierend auf der die Sensor-Messmarke von der aktuellen Position auf die Sollposition positionierbar ist.

Das Verfahren bietet den Vorteil, dass mittels der Messanordnung eine technisch einfache und exakte Positionierung der Sensor- Messmarke gemäß der berechneten Fahrzeugbezugsinformationen ermöglicht wird.

Gemäß einem Ausführungsbeispiel des Verfahrens werden mehrere an den Rädern des Fahrzeugs angeordnete Messmarken mittels der ersten und zweiten Kamera erfasst. Die Fahrzeugbezugsinformationen umfassen die geometrische Fahrachse des Fahrzeugs oder eine davon abgeleitete Information. Damit lässt sich eine Positionierung der Sensor-Messmarke basierend auf der geometrischen Fahrachse des Fahrzeugs vornehmen, was vorteilhaft ist, da der zu kalibrierende Sensor ebenfalls häufig in Bezug auf die geometrische Fahrachse justiert werden muss.

Gemäß einem alternativen Ausführungsbeispiel des Verfahrens werden mehrere an der Karosserie des Fahrzeugs angeordnete Messmarken mittels der ersten und zweiten Kamera erfasst. Die Fahrzeugbezugsinformationen umfassen eine Karosseriemitteninformation des Fahrzeugs oder eine davon abgeleitete Information, die basierend auf der Lage und Ausrichtung der an der Karosserie angeordneten Messmarken bestimmt wird. Damit lässt sich eine Positionierung der Sensor-Messmarke basierend auf der Karosseriemitteninformation des Fahrzeugs oder einer davon abgeleiteten Größe vornehmen, was vorteilhaft ist, da der zu kalibrierende Sensor auch teilweise in Bezug auf die Karosseriemitte des Fahrzeugs, das den Sensor aufweist, zu justieren ist.

Gemäß einem weiteren alternativen Ausführungsbeispiel des Verfahrens wird zumindest eine an der Karosserie des Fahrzeugs angeordnete Messmarke mittels der dritten Kamera erfasst. Die Fahrzeugbezugsinformationen umfassen eine Karosseriemitteninformation des Fahrzeugs oder eine davon abgeleitete Information, die basierend auf der Lage und Ausrichtung der zumindest einen an der Karosserie des Fahrzeugs angeordneten Messmarke bestimmt wird. Damit kann die Messanordnung auch in einer inversen Richtung betrieben werden, d.h. aus den Bildinformationen einer an der Fahrzeugkarosserie angeordneten Messmarke, die mit der dritten Kamera erfasst wird, lässt sich die Karosseriemitteninformation berechnen und mittels der Bildinformationen der ersten oder zweiten Kamera lässt sich die Sensor-Messmarke basierend auf der Karosseriemitteninformation auf die Sollposition platzieren.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine Messanordnung zur Bestimmung von Fahrzeuggeometrieinformationen und zur Positionierung einer Sensor-Messmarke basierend auf diesen Fahrzeugbezugsinformationen;
- Fig. 2: eine Messanordnung zur Bestimmung von Fahrzeuggeometrieinformationen und zur Positionierung einer Sensor-Messmarke basierend auf diesen Fahrzeugbezugsinformationen, wobei die Messstation im Vergleich zur Fig. 1 um 180° gedreht angeordnet ist; und
- Fig. 3: beispielhaft ein Ablaufdiagramm mit Verfahrensschritten eines Verfahrens zur Positionierung einer Sensor-Messmarke relativ zu einem Fahrzeug.

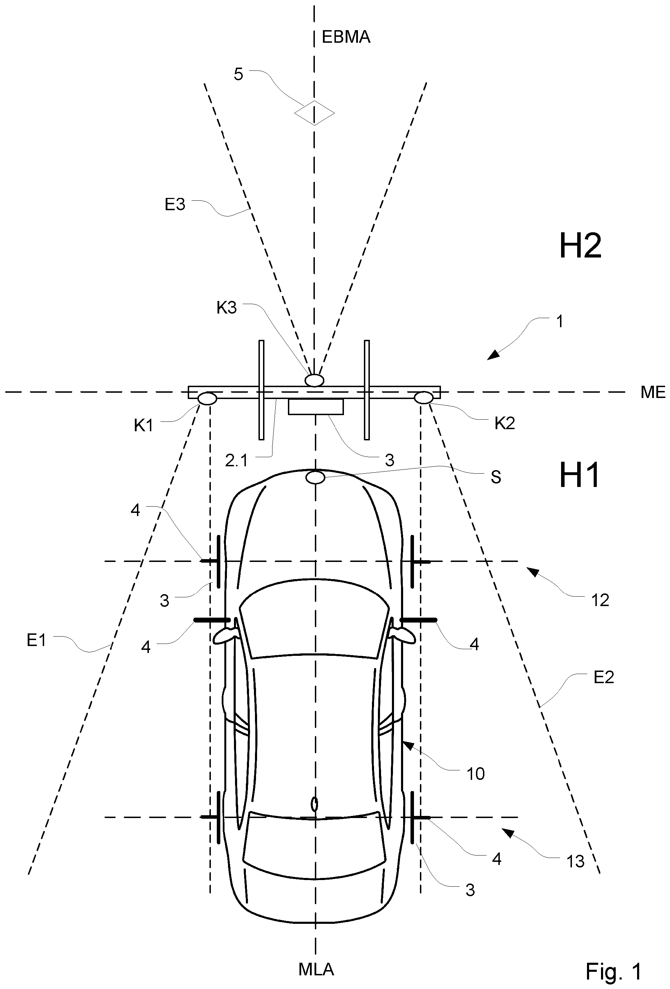

Die Fig. 1 zeigt eine Messanordnung 1 zur Kalibrierung eines Sensors S, beispielsweise einer Kamera, eines Radarsensors oder eines LIDAR-Sensors eines Fahrzeugs 10. Die Messanordnung 1 umfasst eine Messstation 2, die beispielsweise vor oder hinter einem Fahrzeug 10 angeordnet ist. Die Messtation 2 ist dazu ausgebildet, Messmarken 4, die am Fahrzeug 10 angeordnet sind, zu erfassen und basierend darauf Fahrzeugbezugsinformationen zu bestimmen, die für die Kalibrierung des Sensors S benötigt werden. Derartige Fahrzeugbezugsinformationen können beispielsweise die geometrische Fahrachse oder eine Karosseriemitteninformation, insbesondere die Mittellängsachse MLA des Fahrzeugs 10 sein. Die Messmarken 4 können dabei an den Rädern 11 des Fahrzeugs 10 angeordnete Messmarken 4 sein, um die geometrische Fahrachse des Fahrzeugs 10 zu bestimmen oder eine oder mehrere Messmarken 4, die an der Karosserie des Fahrzeugs 10 angeordnet werden und basierend auf denen Fahrzeugbezugsinformation, beispielsweise eine Karosseriemitteninformation, bestimmbar ist.

Es sei angemerkt, dass sich die geometrische Fahrachse von der Mittellängsachse MLA des Fahrzeugs 10 unterscheiden kann. Die Mittelängsachse MLA ist die mittig in Längsrichtung durch die Fahrzeugkarosserie verlaufende Achse, d.h. die zwischen einem vorderen Karosseriemittelpunkt und einem hinteren Karosseriemittelpunkt verlaufende Achse. Die geometrische Fahrachse kann von dieser Mittelängsachse MLA des Fahrzeugs 10 abweichen, insbesondere dann, wenn ein oder mehrerer Räder 11 eines Fahrzeugs 10 Fehlstellungen aufweisen.

Wie in der Fig. 1 gezeigt, ist jeweils zumindest eine Messmarke 4 einem Rad 11 zugeordnet, d.h. bei einem Fahrzeug 10 mit vier Rädern 11 befinden sich jeweils zwei Messmarken 4 an der Vorderachse 12 und zwei Messmarken 4 an der Hinterachse 13. Die Messmarken 4 können beispielsweise mittels Messmarkenträger an den Rädern 11 angeordnet sein. Die Messmarkenträger sind insbesondere zur spannenden Befestigung der Messmarken 4 an der Felge des Fahrzeugs 10 ausgebildet. Der Messmarkenträger ist dazu konfiguriert, die Messmarke 4 relativ zu einer äußeren Radseitenfläche zu beabstanden, so dass die Messmarke 4 seitlich von dem Rad 11 absteht. Die an den Rädern angeordneten Messmarken 4 können beispielsweise 3D-Messmarken mit einem mittels einer Kamera erfassbaren geometrischen Muster sein, über die die Radposition im Raum (d.h. dreidimensional) sowie auch die winkelmäßige Radstellung (z.B. Radsturz) messbar sind. Über die Lage und Ausrichtung der an den Rädern 11 angeordneten Messmarken 4 lässt sich die geometrische Fahrachse des Fahrzeugs 10 bestimmen und über die Messanordnung kann eine Sensor-Messmarke 5 relativ zu dieser geometrischen Fahrachse ausgerichtet werden.

Die Messstation 1 weist einen Messbalken 1.1 auf, der bevorzugt horizontal oder im Wesentlichen horizontal ausgebildet ist und sich damit entlang der Fahrzeugbreite erstreckt. An dem Messbalken 1.1 ist eine erste Kamera K1 und eine zweite Kamera K2 vorgesehen, und zwar die erste Kamera K1 im linken Endbereich des Messbalkens 1.1 und die zweite Kamera K2 im rechten Endbereich des Messbalkens 1.1. Die erste Kamera K1 weist einen ersten Erfassungsbereich E1 auf und ist dazu ausgebildet, die an der linken Fahrzeugseite angeordneten Messmarken 4 zu erfassen. In analoger Weise weist die zweite Kamera K2 einen zweiten Erfassungsbereich E2 auf und ist dazu ausgebildet, die an der rechten Fahrzeugseite angeordneten Messmarken 4 zu erfassen. Diese Messmarken können an den Rädern 11 angeordnete Messmarken 4 oder aber an den seitlichen Karosserieflächen angeordnete Messmarken 4 sein, wie dies in Fig. 1 gezeigt ist.

Die Messanordnung 1 weist eine Rechnereinheit 3 auf, auf der ein Programm zur Bestimmung von Fahrzeugbezugsinformationen vorgesehen ist. Die Fahrzeugbezugsinformationen können insbesondere die geometrische Fahrachse des Fahrzeugs 10, eine Karosseriemitteninformation oder davon abgeleitete Informationen umfassen. Die Rechnereinheit 3 ist mit der ersten Kamera K1 und der zweiten Kamera K2 gekoppelt, sodass die Rechnereinheit 3 Bildinformationen der ersten und zweiten Kamera K1, K2 empfangen kann. Die Bildinformationen der ersten Kamera K1 enthalten die an der linken Fahrzeugseite an den Rädern 11 oder der Fahrzeugkarosserie angeordneten Messemarken 4, die Bildinformationen der zweiten Kamera K2 die an der rechten Fahrzeugseite an den Rädern 11 oder der Fahrzeugkarosserie angeordneten Messmarken 4.

Das Programm der Rechnereinheit 3 ist dazu ausgebildet, basierend auf den Darstellungen der Messmarken 4, die in den durch die Kameras K1, K2 aufgenommenen Bildinformationen enthalten sind, die Fahrzeugbezugsinformationen zu berechnen.

Nach Fahrzeugreparaturen kann es nötig sein, eine oder mehrere Sensoren S, die das Fahrzeug 10 aufweist, zu justieren und/oder zu kalibrieren. Ein derartiger Sensor S ist in dem Ausführungsbeispiel der Figur beispielsweise frontseitig vorgesehen. Zur Justage bzw. Kalibrierung dieses Sensors S kann eine Sensor-Messmarke 5 nötig sein, die an einer definierten Sollposition relativ zum Fahrzeug 10 positioniert sein muss, um die Kalibrierung bzw. Justage durchführen zu können. Die Sensor-Messmarke 5 muss häufig in einem Abstand zum Fahrzeug 10 vorgesehen werden, der beispielsweise mehrere Meter (beispielsweise 5m vor dem Fahrzeug) beträgt.

Zur Erfassung der Istposition der Sensor-Messmarke 5 weist die Messanordnung eine dritte Kamera K3 auf. Diese ist ebenfalls an der Messtation 2 vorgesehen, weist aber eine Erfassungsrichtung auf, die der Erfassungsrichtung der ersten und zweiten Kamera K1, K2 entgegengesetzt gerichtet ist.

Wie in der Fig. 1 gezeigt, wird durch die Messstation 2 eine Messstationsebene ME definiert. Diese Messstationsebene ME unterteilt den gesamten Raum in einen ersten und einen zweiten Halbraum H1, H2. In dem ersten Halbraum H1 ist im gezeigten Ausführungsbeispiel das Fahrzeug 10 vorgesehen. Die Erfassungsbereiche E1, E2 der ersten und zweiten Kamera K1, K2 liegen in dem ersten Halbraum H1. Der Erfassungsbereich E3 der dritten Kamera K3 hingegen liegt zumindest mit dem überwiegenden Teil im zweiten Halbraum H2, so dass durch die dritte Kamera K3 ein vom Fahrzeug 10 abgewandter Raumbereich, der vor oder hinter dem Fahrzeug 10 liegt, erfassbar ist.

Der Erfassungsbereich E3 der dritten Kamera K3 weist eine Erfassungsbereichmittelachse EBMA auf. Diese Erfassungsbereichmittelachse EBMA verläuft parallel oder im Wesentlichen parallel zur Mittellängsachse MLA des Fahrzeugs 10. Damit erfasst die dritte Kamera K3 beispielsweise einen Bereich zentral vor oder hinter dem Fahrzeug 10.

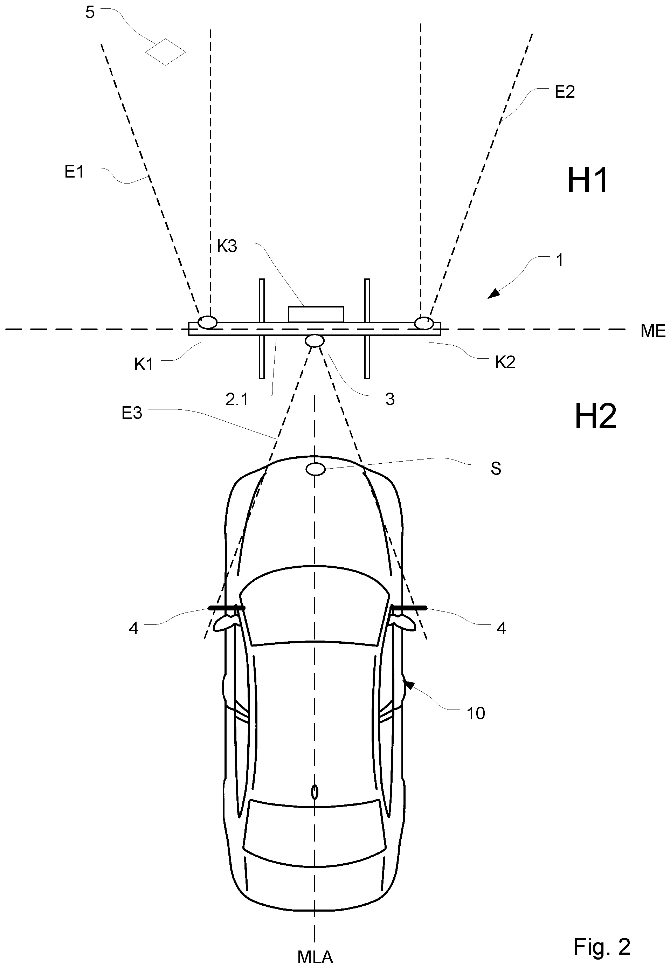

Fig. 2 zeigt eine alternative Messanordnung 1, bei der die Messstation 2 im Vergleich zur Fig. 1 um 180° gedreht angeordnet ist. Damit ist der Erfassungsbereich E3 der dritten Kamera K3 auf das Fahrzeug 10 hin ausgerichtet und das Fahrzeug 10 liegt in dem zweiten Halbraum H2, in dem auch der Erfassungsbereich E3 zumindest größtenteils erstreckt.

Durch die mittig am Messbalken angeordnete dritte Kamera K3 kann ein mittiger frontseitiger oder rückseitiger Fahrzeugbereich erfasst werden. In dem in Fig. 2 gezeigten Ausführungsbeispiel sind beispielhaft zwei Messmarken 4 an der Fahrzeugkarosserie angeordnet, nämlich im Bereich der A-Säulen des Fahrzeugs 10. Diese Messmarken 4 können durch die Kamera K3 erfasst werden.

Durch die Rechnereinheit 3 lässt sich die Lage und/oder die Ausrichtung der Messmarken 4 erfassen und basierend darauf können Fahrzeugbezugsinformationen berechnet werden, die beispielsweise die Mittellängsachse MLA umfassen. Es versteht sich, dass die Fahrzeugbezugsinformationen auch andere oder zusätzliche Informationen umfassen können. Basierend auf diesen Fahrzeugbezugsinformationen kann anschließend eine Positionierung einer Sensor-Messmarke 5 erfolgen, die an einer bestimmten Position im Raum relativ zum Fahrzeug 10, das den Sensor S aufweist, anzuordnen ist. Diese Sensor-Messmarke 5 ist im Halbraum H1 angeordnet, in dem sich das Fahrzeug 10 nicht befindet.

Die Erfassung der Istposition der Sensor-Messmarke 5 erfolgt mittels der ersten oder zweiten Kamera K1, K2.

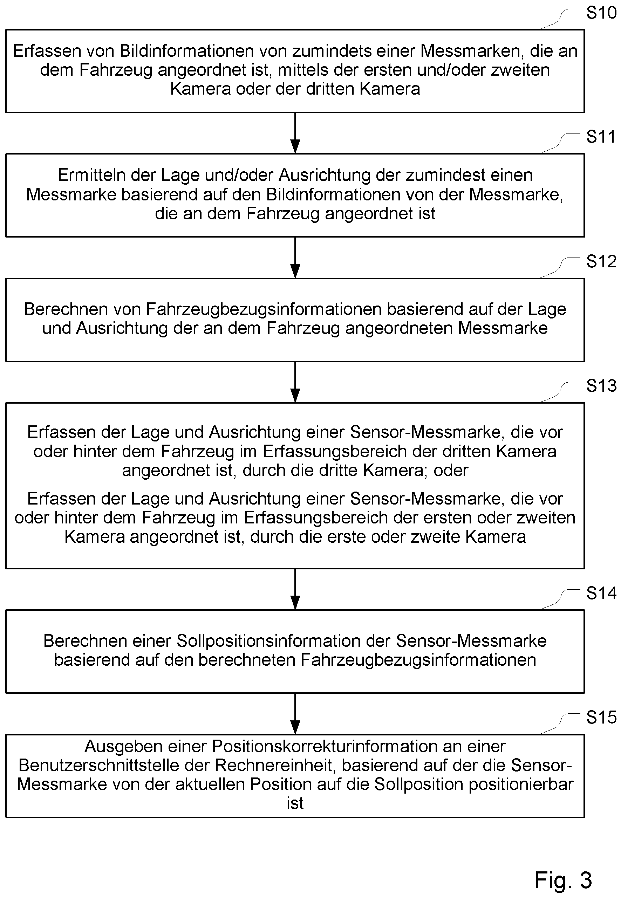

Nachfolgend wird ein Verfahren basierend auf Fig. 3 beschrieben, das zur Positionierung der Sensor-Messmarke 5 relativ zum Fahrzeug 10 angewandt wird und das unter Nutzung der vorher beschriebenen Messanordnung 1 vollzogen wird.

Zunächst werden Bildinformationen von zumindest einer Messmarke 4, die an dem Fahrzeug 10 angeordnet ist, mittels der ersten und/oder zweiten Kamera K1, K2 (s. Fig. 1) oder alternativ mittels der dritten Kamera K3 (s. Fig. 2) aufgenommen (S10). Die Messmarken 4 weisen beispielsweise jeweils ein geometrisches Muster auf.

Anschließend wird mittels der Rechnereinheit 3 der Messstation 2 die Lage und/oder Ausrichtung der zumindest einen Messmarke 4 ermittelt, und zwar basierend auf den Bildinformationen der Messmarke 4, die an dem Fahrzeug angeordnet ist (S11). Dies erfolgt vorzugsweise durch einen Vergleich des geometrischen Musters, das mittels der jeweiligen Kamera K1, K2, K3 aufgenommenen wurde, mit einem in der Rechnereinheit gespeicherten oder dort verfügbaren Referenzmuster. Für den Fall, dass die Messmarke 4 an einem Rad 11 des Fahrzeugs 10 angeordnet ist, kann durch die Rechnereinheit 3 die Lage und Ausrichtung des Rades 11 relativ zu einem Bezugspunkt bestimmt werden. Bei Anordnung der Messmarke 4 an der Karosserie des Fahrzeugs 10 kann durch die Rechnereinheit 3 die Lage und/oder Ausrichtung der Karosserieposition, an der die Messmarke angeordnet ist, relativ zu einem Bezugspunkt bestimmt werden.

Basierend auf der Lage und Ausrichtung der zumindest einen Messmarke 4 werden mittels der Rechnereinheit 3 der Messstation 2 Fahrzeugbezugsinformationen berechnet (S12). Die Fahrzeugbezugsinformationen umfassen Informationen des Fahrzeugs 10, die zur Kalibrierung bzw. Justierung des Sensors S des Fahrzeugs 10 nötig sind. Ein Beispiel einer Fahrzeugbezugsinformation ist die geometrische Fahrachse oder die Fahrzeugmittelachse MLA des Fahrzeugs 10.

Anschließend wird die Lage und Ausrichtung einer Sensor-Messmarke 5 erfasst. Diese Sensor-Messmarke 5 kann in einer ersten Messsituation vor oder hinter dem Fahrzeug 10 im Erfassungsbereich E3 der dritten Kamera K3 angeordnet sein. In einer zweiten Messsituation kann die Sensor-Messmarke 5 vor oder hinter dem Fahrzeug 10 im Erfassungsbereich E1, E2 der ersten oder zweiten Kamera K1, K2 angeordnet sein (S13). Dabei ist der jeweilige Erfassungsbereich E1, E2, E3 der Kamera K1, K2, K3, mit der die Sensor-Messmarke 5 erfasst wird, vom Fahrzeug 10 weg gerichtet.

Um die Sensor-Messmarke 5 auf einer gewünschten Sollposition zu positionieren, wird mittels der Rechnereinheit 3 der Messstation 2 eine Sollpositionsinformation der Sensor-Messmarke 5 basierend auf den Fahrzeugbezugsinformationen berechnet (S14). Die Sollpositionsinformation gibt an, wo sich die Sensor-Messmarke 5 befinden soll, damit ein Sensor S des Fahrzeugs 10 mittels der Sensor-Messmarke 5 justiert bzw. kalibriert werden kann.

Zuletzt wird eine Positionskorrekturinformation an einer Benutzerschnittstelle der Rechnereinheit 3 ausgegeben, basierend auf der die Sensor-Messmarke 5 von der aktuellen Position auf die Sollposition positionierbar ist (S15). Die Benutzerschnittstelle kann beispielsweise eine graphische Benutzerschnittstelle, eine akustische Benutzerschnittstelle oder eine Kombination aus beidem sein. Durch die Positionskorrekturinformation wird dem Werkstattpersonal eine Anweisung gegeben, in welche Richtung und wie weit die Sensor- Messmarke 5 umpositioniert und/oder in der Ausrichtung verändert werden muss, um die gewünschte Sollposition zu erreichen.

Wenn die Sensor-Messmarke 5 an der Sollposition positioniert wurde, kann die Kalibrierung und/oder Justage des Sensors S erfolgen. Hierzu wird vorzugsweise die Messtation 2 aus der Sichtlinie zwischen dem Sensor S und der Sensor- Messmarke 5 herausbewegt, so dass der Sensor S direkt mit der Sensor- Messmarke 5 interagieren kann.

Vorzugsweise ist die Rechnereinheit 3 dazu ausgebildet, den Vorgang der Positionierung der Sensor-Messmarke 5 auf die Sollposition zu protokollieren, damit diese und vorzugsweise auch der Kalibrier- und/oder Justiervorgang auch später nachvollziehbar sind.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Messanordnung
- 2: Messstation
- 2.1: Messbalken
- 3: Rechnereinheit
- 4: Messmarke
- 5: Sensor-Messmarke

- 10: Fahrzeug
- 11: Rad
- 12: Vorderachse
- 13: Hinterachse

- E1: erster Erfassungsbereich
- E2: zweiter Erfassungsbereich
- E3: dritter Erfassungsbereich
- EBMA: Erfassungsbereichsmittelachse des dritten Erfassungsbereichs
- H1: erster Halbraum
- H2: zweiter Halbraum
- K1: erste Kamera
- K2: zweite Kamera
- K3: dritte Kamera
- ME: Messstationsebene
- MLA: Mittellängsachse des Fahrzeugs

## Patentansprüche

1. Messanordnung zur Kalibrierung eines Sensors (S) eines Fahrzeugs (10) umfassend eine Messstation (2) mit einer Messstationsebene (ME), durch die ein erster und zweiter Halbraum (H1, H2) voneinander abgegrenzt wird, wobei die Messtation (2) eine erste und eine zweite Kamera (K1, K2) umfasst, die an der Messtation (2) derart angeordnet sind, dass durch die erste und zweite Kamera (K1, K2) jeweils ein Bereich des ersten Halbraums (H1) erfassbar ist, wobei die Messtation (2) dazu ausgebildet ist, vor oder hinter dem Fahrzeug (10) angeordnet zu werden und zumindest eine dritte Kamera (K3) aufweist, die derart an der Messtation angeordnet ist, dass der Erfassungsbereich der dritten Kamera (K3) in dem zweiten Halbraumraum (H2) liegt.

2. Messanordnung nach Anspruch 1, **dadurch gekennzeichnet, dass** die erste Kamera (K1) einen ersten Erfassungsbereich und die zweite Kamera (K2) einen zweiten Erfassungsbereich mit jeweils einer Erfassungsbereichsmittelachse aufweisen, die in Bezug auf die Messstationsebene (ME) zu einer ersten Seite von dieser Messstationsebene (ME) abstehen und dass die dritte Kamera (K3) einen dritten Erfassungsbereich (E3) mit einer dritten Erfassungsbereichsmittelachse aufweist, die zu einer zweiten Seite, die der ersten Seite gegenüberliegt, von der Messstationsebene (ME) absteht.

3. Messanordnung nach Anspruch 1 oder 2, **dadurch gekennzeichnet, dass** die erste und zweite Kamera (K1, K2) an einem horizontal verlaufenden Messbalken (2.1) angeordnet und derart zueinander beabstandet sind, dass die erste Kamera (K1) zum Erfassen eines ersten Bereichs seitlich links neben dem Fahrzeug (10) und die zweite Kamera (K2) zum Erfassen eines dem ersten Bereich gegenüberliegenden Bereichs seitlich rechts neben dem Fahrzeug (10) ausgebildet ist.

4. Messanordnung nach einem der vorhergehenden Ansprüche, **dadurch gekennzeichnet, dass** die dritte Kamera (K3) zur Erfassung eines Rückraums, der hinter der Messtation (2) liegt und vom zu vermessenden Fahrzeug (10) abgewandt ist, ausgebildet ist und eine Erfassungsbereichsmittelachse (EBMA) aufweist, die senkrecht oder im Wesentlichen senkrecht zur Messstationsebene (ME) verläuft.

5. Messanordnung nach einem der vorhergehenden Ansprüche, **dadurch gekennzeichnet, dass** die Messanordnung (1) eine Rechnereinheit (3) mit einem Programm aufweist, wobei das Programm dazu ausgebildet ist, Bildinformationen von Messmarken (4), die an den Rädern (11) des Fahrzeugs (10) angeordnet sind, mittels der ersten und zweiten Kamera (K1, K2) zu erfassen, und basierend darauf Informationen zur Lage und Ausrichtung der Räder (11) des Fahrzeugs (10) zu berechnen und dass das Programm zudem dazu ausgebildet ist, Positionskorrekturinformationen zu einer Sensor-Messmarke (5), die zur Kalibrierung eines Sensors (S) des Fahrzeugs (10) verwendet wird, der einen vor und/oder hinter dem Fahrzeug liegenden Umgebungsbereich erfasst, basierend auf den Bildinformationen, die von der dritten Kamera (K3) bereitgestellt werden und die diese Sensor-Messmarke (5) enthalten, zu berechnen.

6. Messanordnung nach einem der Ansprüche 1 bis 4, **dadurch gekennzeichnet, dass** die Messanordnung (1) eine Rechnereinheit (3) mit einem Programm aufweist, wobei das Programm dazu ausgebildet ist, Bildinformationen von Messmarken (4), die in Seitenbereichen der Karosserie des Fahrzeugs (10) angeordnet sind, mittels der ersten und zweiten Kamera (K1, K2) zu erfassen, und basierend darauf Fahrzeugbezugsinformationen zu berechnen und dass das Programm zudem dazu ausgebildet ist, Positionskorrekturinformationen zu einer Sensor-Messmarke (5), die zur Kalibrierung eines Sensors (S) des Fahrzeugs (10) verwendet wird, der einen vor und/oder hinter dem Fahrzeug liegenden Umgebungsbereich erfasst, basierend auf den Bildinformationen, die von der dritten Kamera (K3) bereitgestellt werden und die diese Sensor-Messmarke (5) enthalten, zu berechnen.

7. Messanordnung nach einem der Ansprüche 1 bis 4, **dadurch gekennzeichnet, dass** die Messanordnung (1) eine Rechnereinheit (3) mit einem Programm aufweist, wobei das Programm dazu ausgebildet ist, Bildinformationen von Messmarken (4), die an einer oder mehreren vorgegebenen Positionen am Fahrzeug (10) angeordnet sind, mittels der dritten Kamera (K3) zu erfassen, und basierend darauf Fahrzeugbezugsinformationen zu berechnen und dass das Programm zudem dazu ausgebildet ist, Positionskorrekturinformationen zu einer Sensor-Messmarke (5), die zur Kalibrierung eines Sensors (S) des Fahrzeugs (10) verwendet wird, der einen vor und/oder hinter dem Fahrzeug liegenden Umgebungsbereich erfasst, basierend auf den Bildinformationen, die von der ersten und/oder zweiten Kamera (K1, K2) bereitgestellt werden und die diese Sensor-Messmarke (5) enthalten, zu berechnen.

8. Messanordnung nach einem der Ansprüche 5 bis 7, **dadurch gekennzeichnet, dass** das Programm Sollpositionsinformationen der Sensor-Messmarke (5) aufweist und dass die Positionskorrekturinformationen angeben, wie die Position und/oder Ausrichtung der Sensor-Messmarke (5) verändert werden muss, damit die Sensor-Messmarke (5) eine für die Kalibrierung des Sensors (S) des Fahrzeugs (10) erforderliche Sollposition einnimmt.

9. Messanordnung nach einem der Ansprüche 5 bis 8, **dadurch gekennzeichnet, dass** das Programm der Rechnereinheit (3) Informationen zur Position der dritten Kamera (K3) relativ zur Position der ersten und zweiten Kamera (K1, K2) aufweist.

10. Verfahren zur Positionierung einer Sensor-Messmarke (5) relativ zu einem Fahrzeug (10) mittels einer Messanordnung (1), die eine Messstation (2) mit einer ersten, einer zweiten und einer dritten Kamera (K1, K2, K3) umfasst, wobei die Messstation (2) dazu ausgebildet ist, vor oder hinter dem Fahrzeug (10) angeordnet zu werden und wobei die Erfassungsbereiche (E1, E2) der ersten und zweiten Kamera entgegengesetzt zu dem Erfassungsbereich (E3) der dritten Kamera (K3) gerichtet sind, wobei das Verfahren folgende Schritte umfasst:
- Erfassen von Bildinformationen zumindest einer an dem Fahrzeug (10) angeordneten Messmarke (4) mittels der ersten und/oder zweiten Kamera (K1, K2) oder mittels der dritten Kamera (K3) (S10);
- mittels der Rechnereinheit (3) der Messstation (2), Ermitteln der Lage und/oder Ausrichtung der zumindest einen Messmarke (4) basierend auf den Bildinformationen der zumindest einen Messmarke (4), die an dem Fahrzeug (10) angeordnet ist (S11);
- mittels der Rechnereinheit (3) der Messstation (2), Berechnen von Fahrzeugbezugsinformationen basierend auf der Lage und/oder Ausrichtung der am Fahrzeug (10) angeordneten Messmarke (4) (S12);
- Erfassen:
o der Lage und Ausrichtung einer Sensor-Messmarke (5), die vor oder hinter dem Fahrzeug (10) im Erfassungsbereich (E3) der dritten Kamera (K3) angeordnet ist, durch die dritte Kamera (K3), falls die zumindest eine am Fahrzeug (10) angeordnete Messmarke (4) mittels der ersten und/oder zweiten Kamera (K1, K2) erfasst wurde, oder
o Erfassen der Lage und Ausrichtung einer Sensor-Messmarke (5), die vor oder hinter dem Fahrzeug (10) im Erfassungsbereich (E1, E2) der ersten oder zweiten Kamera (K1, K2) angeordnet ist, mittels der ersten oder zweiten Kamera (K1, K2), falls die zumindest eine am Fahrzeug (10) angeordnete Messmarke (4) mittels der dritten Kamera (K3) erfasst wurde (S13);
- mittels der Rechnereinheit (3) der Messstation (2), Berechnen einer Sollposition der Sensor-Messmarke (5) basierend auf den berechneten Fahrzeugbezugsinformationen (S14); und
- Ausgeben einer Positionskorrekturinformation an einer Benutzerschnittstelle der Rechnereinheit (3), basierend auf der die Sensor-Messmarke (5) von der aktuellen Position auf die Sollposition positionierbar ist (S15).

11. Verfahren nach Anspruch 10, **dadurch gekennzeichnet, dass** mehrere an den Rädern (11) des Fahrzeugs (10) angeordnete Messmarken (4) mittels der ersten und zweiten Kamera (K1, K2) erfasst werden und dass die Fahrzeugbezugsinformationen die geometrische Fahrachse des Fahrzeugs (10) oder eine davon abgeleitete Information umfassen, die basierend auf der Lage und Ausrichtung der an den Rädern (11) angeordneten Messmarken bestimmt wird.

12. Verfahren nach Anspruch 10, **dadurch gekennzeichnet, dass** mehrere
an der Karosserie des Fahrzeugs (10) angeordnete Messmarken (4) mittels der ersten und zweiten Kamera (K1, K2) erfasst werden und dass die Fahrzeugbezugsinformationen eine Karosseriemitteninformation des Fahrzeugs (10) oder eine davon abgeleitete Information umfassen, die basierend auf der Lage und Ausrichtung der an der Karosserie angeordneten Messmarken bestimmt werden.

13. Verfahren nach Anspruch 10, **dadurch gekennzeichnet, dass**
zumindest eine an der Karosserie des Fahrzeugs (10) angeordnete Messmarke (4) mittels der dritten Kamera (K3) erfasst wird und dass die Fahrzeugbezugsinformationen eine Karosseriemitteninformation des Fahrzeugs (10) oder eine davon abgeleitete Information umfassen, die basierend auf der Lage und Ausrichtung der zumindest einen an der Karosserie des Fahrzeugs (10) angeordneten Messmarke bestimmt werden.
